# EUROPEAN PATENT APPLICATION

(11) **EP 4 811 697 A1**
(43) Date of publication of application: **23.09.2026**
(21) Application number: 26158417.1
(22) Date of filing: 13.02.2026
(51) Int. Cl.: H04L 1/1867

(54) **TRIGGER FOR RETRANSMISSION**

(30) Priority: 21.03.2025 WO PCT/CN2025/084173
(71) Applicant: Nokia Technologies Oy, 02610 Espoo (FI)
(72) Inventor: WU, Chunli, Beijing (CN); SEBIRE, Benoist Pierre, Tokyo (JP); LEE, SunYoung, Seoul (KR)
(74) Representative: Nokia EPO representatives

(57) **Abstract**

Embodiments of the present disclosure relate to a trigger for a retransmission. In an aspect, a terminal device performs a method comprising: method comprising: performing, at a terminal device, an initial transmission for a protocol data unit, PDU, in a radio link control, RLC, layer to a network device; and triggering a retransmission, at the terminal device, for the PDU in the RLC to the network device when submitting the initial transmission for the PDU from the RLC layer to a medium access control, MAC, layer, based on a discard timer associated with the PDU in a packet data convergence protocol layer, PDCP, being below a threshold when submitting the initial transmission for the PDU from the RLC layer to the MAC layer.

## Description

### FIELD

Various example embodiments relate to the field of communications and in particular, to devices, methods, apparatuses, and computer readable storage media for a trigger for a retransmission.

### BACKGROUND

A communication network can be seen as a facility that enables communications between two or more communication devices, or provides communication devices access to a data network. A mobile or wireless communication network is one example of a communication network.

Such communication networks operate in accordance with standards, such as those promulgated by third generation partnership project (3GPP) or European telecommunications standards institute (ETSI). Examples of such standards include the so-called 5th generation (5G) standard or other standards promulgated by 3GPP.

### SUMMARY

In general, example embodiments of the present disclosure provide a solution related to a trigger for a retransmission. The invention is defined by the independent claims. Embodiments are defined in the dependent claims.

In a first aspect, there is provided a terminal device. The terminal device comprises at least one processor and at least one memory storing instructions that, when executed by the at least one processor, cause the terminal device at least to: perform an initial transmission for a protocol data unit (PDU) in a first layer to a network device; and trigger a retransmission for the PDU in the first layer to the network device based on a timing of the initial transmission for the PDU in the first layer and based on at least one of the following: a discard timer in a second layer associated with the PDU in the first layer; or a timer in the first layer associated with the PDU in the first layer.

In a second aspect, there is provided a network device. The network device comprises at least one processor and at least one memory storing instructions that, when executed by the at least one processor, cause the network device at least to: transmit, to a terminal device, a configuration of a time threshold associated with a timer in a first layer and a configuration of a discard timer in a second layer, and wherein a timing of an initial transmission for PDU in the first layer and at least one of the discard timer in the second layer and the timer in the first layer are used for triggering a retransmission for the PDU in the first layer.

In a third aspect, there is provided a method. The method comprises performing, at a terminal device, an initial transmission for a PDU in a first layer to a network device; and triggering, at the terminal device, a retransmission for the PDU in the first layer to the network device based on a timing of the initial transmission for the PDU in the first layer and based on at least one of the following: a discard timer in a second layer associated with the PDU in the first layer; or a timer in the first layer associated with the PDU in the first layer.

In a fourth aspect, there is provided a method. The method comprises transmitting, at a network device, to a terminal device, a configuration of a time threshold associated with a timer in a first layer and a configuration of a discard timer in a second layer, and wherein a timing of an initial transmission for a PDU in the first layer and at least one of the discard timer in the second layer and the timer in the first layer are used for triggering a retransmission for the PDU in the first layer.

In a fifth aspect, there is provided an apparatus. The apparatus comprises means for performing, at a terminal device, an initial transmission for a PDU in a first layer to a network device; and means for triggering, at the terminal device, a retransmission for the PDU in the first layer to the network device based on a timing of the initial transmission for the PDU in the first layer and based on at least one of the following: a discard timer in a second layer associated with the PDU in the first layer; or a timer in the first layer associated with the PDU in the first layer.

In a sixth aspect, there is provided an apparatus. The apparatus comprises means for transmitting, at a network device, to a terminal device, a configuration of a time threshold associated with a timer in a first layer and a configuration of a discard timer in a second layer, and wherein a timing of an initial transmission for a PDU in the first layer and at least one of the discard timer in the second layer and the timer in the first layer are used for triggering a retransmission for the PDU in the first layer.

In a seventh aspect, there is provided a non-transitory computer readable medium comprising program instructions for causing an apparatus to perform at least the method according to any one of the above third and fourth aspects.

In an eighth aspect, there is provided a computer program comprising instructions, which, when executed by an apparatus, cause the apparatus at least to perform at least the method according to any one of the above third and fourth aspects.

In a ninth aspect, there is provided a terminal device. The terminal device comprises performing circuitry configured to perform an initial transmission for a PDU in a first layer to a network device; and triggering circuitry configured to trigger a retransmission for the PDU in the first layer to the network device based on a timing of the initial transmission for the PDU in the first layer and based on at least one of the following: a discard timer in a second layer associated with the PDU in the first layer; or a timer in the first layer associated with the PDU in the first layer.

In a tenth aspect, there is provided a network device. The network device comprises transmitting circuitry configured to transmit, to a terminal device, a configuration of a time threshold associated with a timer in a first layer and a configuration of a discard timer in a second layer, and wherein a timing of an initial transmission for a PDU in the first layer and at least one of the discard timer in the second layer and the timer in the first layer are used for triggering a retransmission for the PDU in the first layer.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:
FIG. 1 illustrates an example environment in which example embodiments of the present disclosure can be implemented;
FIG. 2 illustrates a signaling flow between a terminal device and a network device according to some example embodiments of the present disclosure;
FIGS. 3A to 3C illustrate example retransmission triggers according to some example embodiments of the present disclosure;
FIG. 4 illustrates an example communication process according to some example embodiments of the present disclosure;
FIG. 5 illustrates a flowchart of a method implemented at a terminal device according to some embodiments of the present disclosure;
FIG. 6 illustrates a flowchart of a method implemented at a network device according to some embodiments of the present disclosure;
FIG. 7 illustrates a simplified block diagram of a device that is suitable for implementing some example embodiments of the present disclosure; and
FIG. 8 illustrates a block diagram of an example of a computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as new radio (NR), long term evolution (LTE), LTE-advanced (LTE-A), wideband code division multiple access (WCDMA), high-speed packet access (HSPA), narrow band internet of things (NB-IoT) and so on. Furthermore, the communications between a terminal device and a network device in the communication network may be performed according to any suitable generation communication protocols, including, but not limited to, the third generation (3G), the 4G, 4.5G, 5G, or 6G communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device can access the communication network and receive services therefrom. The network device may refer to a base station (BS) or an access point (AP), for example, a node B (NodeB or NB), a radio access network (RAN) node, an evolved NodeB (eNodeB or eNB), an NR NB (also referred to as a gNB), a remote radio unit (RRU), a radio header (RH), an infrastructure device for a V2X (vehicle-to-everything) communication, a transmission and reception point (TRP), a reception point (RP), a remote radio head (RRH), a relay, an integrated access and backhaul (IAB) node, a low power node such as a femto BS, a pico BS, and so forth, depending on the applied terminology and technology.

The term "terminal device" refers to any end device that may be capable of wireless communication. By way of example rather than limitation, a terminal device may also be referred to as a communication device, user equipment (UE), a subscriber station (SS), a portable subscriber station, a mobile station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

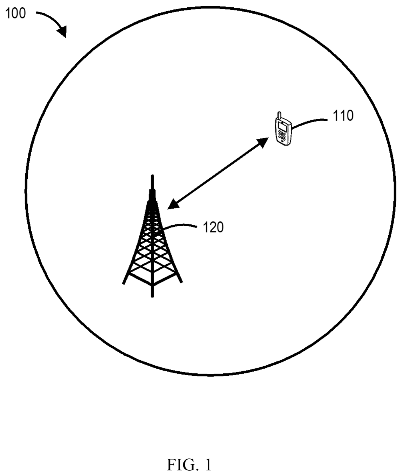

Principles and implementations of embodiments of the present disclosure will be described in detail below with reference to the figures. Reference is first made to FIG. 1, which illustrates an example environment 100 in which example embodiments of the present disclosure can be implemented.

The environment 100, which may be a part of a communication network, comprises a terminal device 110 and a network device 120 communicating with each other. The communication between the terminal device 110 and the network device 120 may be direct or indirect. As an example, the terminal device 110 and the network device 120 may communicate with one or more further devices not shown in FIG. 1.

To transmit data and/or control information, the terminal device 110 may perform communications with the network device 120. A link from the network device 120 to the terminal device 110 is referred to as a downlink (DL), while a link from the terminal device 110 to the network device 120 is referred to as an uplink (UL).

Although the terminal device 110 and the network device 120 are described in the communication environment 100 of FIG. 1, embodiments of the present disclosure may apply to any other suitable communication devices in communication with one another. That is, embodiments of the present disclosure are not limited to the exemplary scenarios of FIG. 1. In this regard, it is noted that although the terminal device is schematically depicted as a mobile phone and the network device 120 is schematically depicted as a base station in FIG. 1. It is understood that these depictions are exemplary in nature without suggesting any limitation. In other embodiments, the terminal device 110 and the network device 120 may be any other communication devices, for example, any other wireless communication devices.

It is to be understood that the particular number of various communication devices and the particular number of various communication links as shown in FIG. 1 is for illustration purpose only without suggesting any limitations. The communication environment 100 may include any suitable number of communication devices and any suitable number of communication links for implementing embodiments of the present disclosure. In addition, it should be appreciated that there may be various wireless as well as wireline communications (if needed) among all of the communication devices.

The communications in the environment 100 may follow any suitable communication standards or protocols, which are already in existence or to be developed in the future, such as Universal Mobile Telecommunications System (UMTS), long term evolution (LTE), LTE-Advanced (LTE-A), the fifth generation (5G) New Radio (NR), sixth generation (6G), Wireless Fidelity (Wi-Fi) and Worldwide Interoperability for Microwave Access (WiMAX) standards, and employs any suitable communication technologies, including, for example, Multiple-Input Multiple-Output (MIMO), Orthogonal Frequency Division Multiplexing (OFDM), time division multiplexing (TDM), frequency division multiplexing (FDM), code division multiplexing (CDM), Bluetooth, ZigBee, and machine type communication (MTC), enhanced mobile broadband (eMBB), massive machine type communication (mMTC), ultra-reliable low latency communication (URLLC), Carrier Aggregation (CA), Dual Connectivity (DC), and New Radio Unlicensed (NR-U) technologies.

Packet data convergence protocol (PDCP) layer is a crucial layer in the LTE/5G protocol stack, responsible for handling data packets efficiently. It operates in both the user plane and the control plane, providing services to a radio link control (RLC) layer and interacting with a radio resource control (RRC) layer. The PDCP layer performs several key functions, including header compression to reduce IP packet overhead, which is essential for efficient radio resource utilization. It also ensures security by providing encryption and integrity protection for user data and control plane messages, maintaining confidentiality and integrity. Additionally, The PDCP layer guarantees in-sequence delivery of packets to the upper layers, even if they are received out of order from the lower layers, and it detects and discards duplicate packets to prevent redundant data processing.

A discard timer is a mechanism within the PDCP layer that manages the lifetime of packets in the buffer. When a packet is placed in the PDCP buffer, a discard timer is initiated for that packet. If the discard timer expires before the packet is successfully transmitted, the packet is discarded from the buffer. This mechanism ensures that packets do not remain in the buffer indefinitely, which may lead to excessive delays and inefficient resource use. The discard timer is particularly important in real-time applications like voice and video communication, where timely delivery of data is critical. By discarding outdated packets, the system may focus on transmitting more current data, thereby improving the overall quality of service.

The RLC layer is a key component of the LTE/5G protocol stack, positioned between a Medium Access Control (MAC) layer and the PDCP layer. The RLC layer is responsible for ensuring reliable data transfer and efficient use of radio resources. It provides three modes of operation: transparent mode (TM), unacknowledged mode (UM), and acknowledged mode (AM). In TM, RLC simply forwards data without adding any headers, making it suitable for applications that do not require error correction. UM provides error detection but not error correction, making it suitable for applications that can tolerate some data loss, such as streaming services.

AM, on the other hand, provides both error detection and correction through retransmissions, ensuring reliable data delivery, which is essential for applications requiring high reliability, such as file transfers. It ensures data integrity by detecting and correcting errors, thus maintaining the quality of the communication link. When needed, the RLC AM layer also segments large service data units (SDUs) from the upper layers into smaller protocol data units (PDUs) for transmission and reassembles them upon reception. Each PDU is assigned a sequence number to ensure proper ordering and to detect any missing PDUs. The operation of RLC AM involves three main processes: transmission, reception, and retransmission. During transmission, the RLC AM layer segments SDUs when needed, assigns sequence numbers, and transmits PDUs while maintaining a retransmission buffer to store copies of transmitted PDUs until they are acknowledged. Upon reception, the RLC AM layer reassembles PDUs into SDUs if segmented, checks sequence numbers, and sends status reports back to the transmitter. If any PDUs are missing or corrupted, the receiver requests a retransmission, and the transmitter retransmits the required PDUs from its buffer. RLC AM offers the advantage of reliable data transfer and in-sequence delivery, making it suitable for applications that require high reliability. However, it also introduces increased latency due to the retransmission process and higher overhead from additional control information, such as sequence numbers and status reports.

To address some of these challenges in the context of extended reality (XR), a release 19 (Rel-19) work item was agreed with RLC enhancements as one of the objectives:
- Specify the following user plane enhancements [RAN2]:
   - RLC re-transmission related enhancements for the operation of RLC AM with a small packet delay budget.

The above enhancements target two areas, that is, autonomous retransmissions, and avoiding unnecessary retransmissions. For autonomous retransmissions, timer-based autonomous retransmissions have been proposed. A proposed implementation is that when the PDCP discard timer goes below a given threshold, an autonomous retransmission is triggered. Another proposed implementation is that an autonomous retransmission is triggered based on a new RLC timer which is started after an RLC PDU is submitted to a MAC layer. There are drawbacks for the autonomous retransmission based on the remaining time of the PDCP discard timer and the autonomous retransmission based on the RLC timer. For the autonomous retransmission based on the PDCP discard timer, if the initial RLC transmission only happens after the PDCP discard timer goes below the threshold, for example, due to congestion or scheduling delay, the retransmission may happen immediately which may create too many unnecessary retransmissions, making a possible congestion ever worse. For the autonomous retransmission based on the RLC timer, after the RLC PDU is submitted to MAC, it may not leave enough time for a retransmission if the timer does not expire before the RLC PDU is discarded. Besides, due to the new agreement of RLC aborting new transmission and retransmission, if the RLC layer receives a discard indication from the PDCP layer, it may not have a chance to perform a retransmission anymore after the reception of the discard indication.

As of now, there is no efficient approach to support an autonomous retransmission. In view of the above, how to improve the autonomous retransmission is an important issue to be solved.

According to embodiments of the present disclosure, there is provided a solution to resolve the above issue. With this scheme, a terminal device performs an initial transmission for a PDU in a first layer to a network device. Moreover, the terminal device triggers a retransmission for the PDU in the first layer to the network device based on a timing of the initial transmission for the PDU in the first layer and based on at least one of a discard timer in a second layer associated with the PDU in the first layer, or a timer in the first layer associated with the PDU in the first layer.

By considering the timing of the initial transmission for the PDU, the retransmission can be triggered timely. In this way, it is allowed to improve communication efficiency.

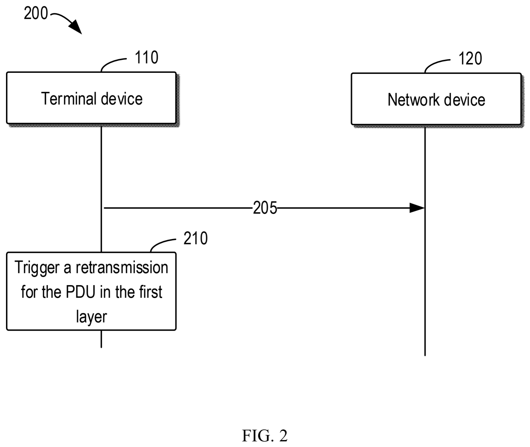

FIG. 2 illustrates a signaling flow 200 between a terminal device and a network device according to some example embodiments of the present disclosure. For the purpose of discussion, the signaling flow 200 will be described with reference to FIG. 1.

As shown in FIG. 2, the terminal device 110 performs (205) an initial transmission for a PDU in a first layer to the network device 120. Further, the terminal device 110 triggers (210) a retransmission (for example, also referred to as an autonomous retransmission) for the PDU in the first layer to the network device 120. The terminal device 110 may trigger the retransmission for the PDU in the first layer based on a timing of the initial transmission for the PDU in the first layer and based on at least one of a discard timer in a second layer associated with the PDU in the first layer, or a timer in the first layer associated with the PDU in the first layer. The discard timer may be for an SDU (or in other words, a PDU as the SDU is associated with the PDU) in the second layer. The PDU in the second layer may be an SDU in the first layer. The SDU in the first layer may be segmented into multiple PDUs in the first layer. The timer in the first layer may comprise the timer linked to the corresponding SDU in the first layer, which is linked to the corresponding PDU in the second layer.

In some example embodiments, the first layer may comprise an RLC layer, and the second layer may comprise a PDCP layer. In this case, the discard timer may be for a PDCP SDU (or in other words, a PDCP PDU), and the PDCP PDU may be an RLC SDU. The RLC SDU may be segmented into multiple RLC PDUs. The timer of the RLC PDU may be the one linked to the corresponding RLC SDU, which is linked to the corresponding PDCP PDU. Alternatively, the first layer and the second layer may be the same layer.

In some example embodiments, the timing of the initial transmission for the PDU in the first layer may be determined in multiple approaches. For example, the timing of the initial transmission for the PDU in the first layer may comprise a timing when the PDU in the first layer is submitted to a third layer (for example, a MAC layer). As another example, the timing of the initial transmission for the PDU in the first layer may comprise a timing when the PDU in the first layer is multiplexed in a PDU in the third layer. As a further example, the timing of the initial transmission for the PDU in the first layer may comprise a timing when the PDU in the third layer is submitted to a fourth layer (for example, a physical (PHY) layer). As yet a further example, the timing of the initial transmission for the PDU in the first layer may comprise a timing when a transport block (TB) associated with the PDU in the third layer is transmitted in the fourth layer. That is, the timing of the initial transmission for the PDU in the first layer may comprise the timing of the actual transmission in the fourth layer over the air.

In some example embodiments, the discard timer in the second layer may be started when an SDU in the second layer associated with the PDU in the first layer is placed in a buffer in the second layer. The network device 120 may transmit a configuration of a time threshold (also referred to as a remaining time threshold) associated with the discard timer in the second layer. The time threshold may be used for determining the trigger of the retransmission for the PDU in the first layer, which will be discussed in detail later.

In some example embodiments, the timer in the first layer may be started upon the initial transmission for the PDU in the first layer. The network device 120 may transmit a configuration of the timer in the first layer. The network device 120 may configure the duration (or in other words, time length) of the timer in the first layer.

The retransmission for the PDU in the first layer may be triggered in a variety of ways. Some example embodiments regarding the trigger criteria are discussed as follows.

In some example embodiments, the terminal device 110 may start the timer in the first layer if the remaining time of the discard timer in the second layer when the initial transmission for the PDU in the first layer is performed is longer than the duration of the timer in the first layer. The remaining time may be defined as the time left before the discard timer expires. In this case, when the initial transmission for the PDU in the first layer happens, if the remaining time of the discard timer in the second layer till discard is larger than the duration of the timer in the first layer, the terminal device 110 may start the timer in the first layer.

In some example embodiments, the terminal device 110 may trigger the retransmission for the PDU in the first layer if the remaining time of the discard timer in the second layer when the initial transmission for the PDU in the first layer is performed is longer than the duration of the timer in the first layer and the timer in the first layer expires. In this case, when the initial transmission for the PDU in the first layer happens, if the remaining time of the discard timer in the second layer till discard is larger than the duration of the timer in the first layer, the terminal device 110 may start the timer in the first layer and trigger the retransmission for the PDU in the first layer upon expiry of the timer in the first layer, as retransmission for the PDU in the first layer based on the timer in the first layer may happen before discarding. For example, the retransmission for the PDU in the first layer may be triggered regardless of whether the remaining time of the discard timer in the second layer becomes less than the time threshold. In other words, the retransmission for the PDU in the first layer may be triggered before or after the remaining time of the discard timer becomes below the time threshold when the timer in the first layer expires.

In some example embodiments, the retransmission for the PDU in the first layer may be triggered if the remaining time of the discard timer in the second layer when the initial transmission for the PDU in the first layer is performed is longer than the duration of the timer in the first layer and the remaining time of the discard timer in the second layer becomes less than the time threshold. In this case, when the initial transmission for the PDU in the first layer happens, if the remaining time of the discard timer in the second layer till discard is larger than the duration of the timer in the first layer, the terminal device 110 may start the timer in the first layer and if the remaining time of the discard timer in the second layer becomes below the time threshold before the timer in the first layer expires, the retransmission for the PDU in the first layer may be triggered based on that the remaining time of the discard timer in the second layer becomes below the time threshold. In the case where the retransmission for the PDU in the first layer is triggered based on the trigger criterion that the remaining time of the discard timer in the second layer becomes less than the time threshold, the terminal device 110 may stop the timer in the first layer so that the timer in the first layer will not expire as another retransmission for the PDU in the first layer should not be triggered.

In other words, when the initial transmission for the PDU in the first layer happens, if the remaining time of the discard timer in the second layer till discard is larger than the duration of the timer in the first layer, the retransmission for the PDU in the first layer may be triggered based on whichever trigger condition of a first trigger condition that the remaining time of the discard timer in the second layer becomes below the time threshold or a second trigger condition that the timer in the first layer expires is met firstly.

Alternatively or additionally, the retransmission for the PDU in the first layer may be triggered if the remaining time of the discard timer in the second layer when the initial transmission for the PDU in the first layer is performed is longer than the duration of the timer in the first layer, the remaining time of the discard timer in the second layer becomes less than the time threshold, and no retransmission for the PDU in the first layer has been triggered. In this case, the time threshold based trigger may only happen if the retransmission for the PDU in the first layer has not been triggered before (for example, triggered by the expiry of the timer in the first layer). Based on the above further trigger criterion that no retransmission for the PDU in the first layer has been triggered, it is allowed to avoid redundant retransmissions for the PDU in the first layer.

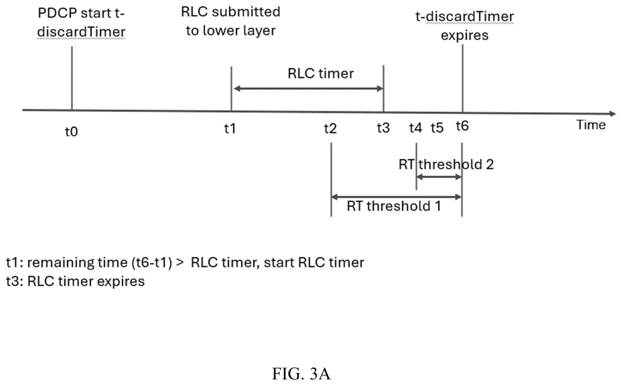

Reference is made to FIG. 3A to discuss an example retransmission trigger. As shown in FIG. 3A, the PDCP entity starts a PDCP discard timer (named t-discardTimer) at t0 and t-discardTimer expires at t6. The RLC entity submits an RLC PDU to the lower layer at t1 and the RLC timer is started. In other words, the initial transmission of the RLC PDU is at t1 and the remaining time of t-discardTimer when the initial transmission happens is longer than the duration of the RLC timer. As an example implementation, a remaining time threshold 1 (denoted as RT threshold 1) is configured. As another example implementation, a remaining time threshold 2 (denoted as RT threshold 2) is configured. As an embodiment, the retransmission for the RLC PDU may be triggered when the RLC timer expires (that is, at t3), regardless of whether the remaining time of t-discardTimer becomes below the RT threshold. In this case, when the retransmission for the RLC PDU is triggered at t3, the remaining time of t-discardTimer may have already become below the RT threshold 1 if the RT threshold 1 is configured or the remaining time of t-discardTimer may not have become below the RT threshold 2 if the RT threshold 2 is configured. As another embodiment, if the RT threshold 2 is configured, the retransmission for the RLC PDU may be triggered when the RLC timer expires (that is, at t3) if the RLC timer expires before the remaining time of t-discardTimer becomes below the RT threshold 2. As a further embodiment, if the RT threshold 1 is configured, the retransmission for the RLC PDU may be triggered when the remaining time of t-discardTimer becomes below the RT threshold 1, if the RLC timer expires after the remaining time of t-discardTimer becomes below the RT threshold 1.

In some example embodiments, the terminal device 110 may trigger retransmission for the PDU in the first layer if the remaining time of the discard timer in the second layer when the initial transmission for the PDU in the first layer is performed is shorter than the duration of the timer in the first layer and a remaining time of the discard timer in the second layer becomes less than the time threshold. In this case, when initial transmission for the PDU in the first layer happens, if the remaining time of the discard timer in the second layer till discard is shorter than the duration of the timer in the first layer, the terminal device 110 may trigger the retransmission for the PDU in the first layer when the remaining time of the discard timer in the second layer becomes below the time threshold such that the retransmission for the PDU in the first layer is triggered before the expiry of the timer in the first layer. The retransmission for the PDU in the first layer based on the timer in the first layer expiry may not be done, as the timer in the first layer may expire after the PDU in the first layer is discarded. The retransmission for the PDU in the first layer may happen immediately for the next TB after the remaining time of the discard timer in the second layer becomes below the time threshold.

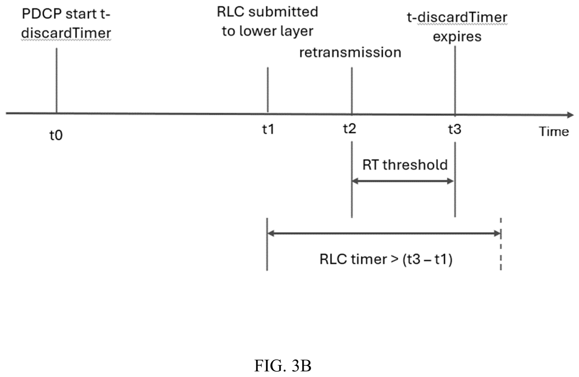

Reference is made to FIG. 3B to discuss an example retransmission trigger. As shown in FIG. 3B, the PDCP entity starts a PDCP discard timer (named t-discardTimer) at t0 and t-discardTimer expires at t3. The RLC entity submits an RLC PDU to the lower layer at t1 and the RLC timer is started. In other words, the initial transmission of the RLC PDU is at t1 and the remaining time of t-discardTimer when the initial transmission happens is shorter than the duration of the RLC timer. Alternatively or additionally, the RLC timer may not be started if the remaining time of t-discardTimer when the initial transmission happens is shorter than the duration of the RLC timer. The retransmission for the RLC PDU may be triggered when the remaining time of t-discardTimer becomes below the RT threshold. That is, the retransmission for the RLC PDU may be triggered at t2.

In some example embodiments, the retransmission for the PDU in the first layer may be triggered if the remaining time of the discard timer in the second layer when the initial transmission for the PDU in the first layer is performed is shorter than the duration of the timer in the first layer and the remaining time of the discard timer in the second layer is (that is, has been) less than the time threshold. In this case, when initial transmission for the PDU in the first layer happens, if the remaining time of the discard timer in the second layer till discard is shorter than the duration of the timer in the first layer, the terminal device 110 may trigger the retransmission for the PDU in the first layer if the remaining time of the discard timer in the second layer has already become below the time threshold. The retransmission for the PDU in the first layer may happen immediately for the next TB in a case where the remaining time of the discard timer in the second layer has already become below the time threshold.

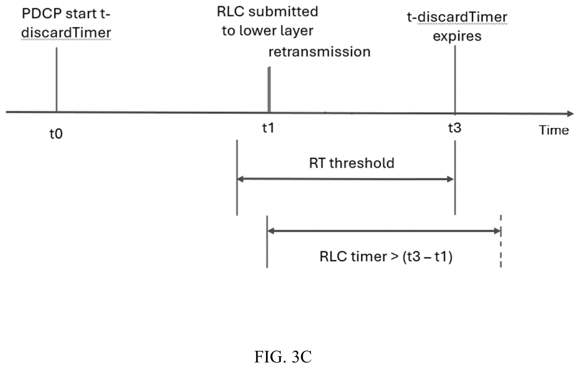

Reference is made to FIG. 3C to discuss an example retransmission trigger. As shown in FIG. 3C, the PDCP entity starts a PDCP discard timer (named t-discardTimer) at t0 and t-discardTimer expires at t3. The RLC entity submits an RLC PDU to the lower layer at t1 and the RLC timer is started. In other words, the initial transmission of the RLC PDU is at t1 and the remaining time of t-discardTimer when the initial transmission happens is shorter than the duration of the RLC timer. Alternatively or additionally, the RLC timer may not be started if the remaining time of t-discardTimer when the initial transmission happens is shorter than the duration of the RLC timer. The retransmission for the RLC PDU may be triggered immediately for the next TB as the remaining time of t-discardTimer has become below the RT threshold. That is, the retransmission for the RLC PDU may be triggered at t1.

In some example embodiments, the time threshold associated with the discard timer in the second layer may not be configured or supported. In this case, the retransmission for the PDU in the first layer may be triggered if the remaining time of the discard timer in the second layer when the initial transmission for the PDU in the first layer is performed is shorter than the duration of the timer in the first layer. In this case, when initial transmission for the PDU in the first layer happens, if the remaining time of the discard timer in the second layer till discard is shorter than the duration of the timer in the first layer, the retransmission for the PDU in the first layer may be triggered immediately for the next TB.

In some example embodiments, the trigger of the retransmission for the PDU in the first layer may be also dependent on whether the terminal device 110 supports or is configured with discarding retransmissions based on a discard indication in response to the expiry of the discard timer in the second layer. For example, if the terminal device 110 is configured with discarding retransmissions based on the discard indication, the PDU in the first layer may be discarded after receiving the discard indication. In this case, if the PDU in the first layer is to be discarded based on the discard indication after the discard timer in the second layer expires, the terminal device 110 may trigger the retransmission for the PDU in the first layer based on the timing of the initial transmission for the PDU in the first layer and based on at least one of the discard timer in the second layer or the timer in the first layer as discussed above. In other words, the terminal device 110 may trigger the retransmission for the PDU in the first layer based on one of the above trigger criteria if the terminal device 110 is configured with discarding retransmissions based on the discard indication.

Alternatively or additionally, if the PDU in the first layer is not to be discarded based on the discard indication, the terminal device 110 may trigger the retransmission for the PDU in the first layer if the timer in the first layer expires. In this case, if the terminal device 110 is not configured with discarding retransmissions based on the discard indication, the terminal device 110 may trigger the retransmission for the PDU in the first layer based on the timer in the first layer.

In some example embodiments, the discard indication may distinguish whether the discard is due to acknowledgement (ACK) which is associated with the PDU in the first layer from the peer entity (i.e., the network device 120) or due to the expiry of the discard timer in the second layer. The ACK may be for a PDU in the second layer which is associated with the PDU in the first layer. In this case, the terminal device 110 may be able to determine whether the discard indication is due to ACK for the PDU in the first layer or due to the discard timer expiry. In the example implementations where the PDU in the first layer is not to be discarded based on the discard indication, if the discard indication is due to the expiry of the discard timer in the second layer, the retransmission for the PDU in the first layer may be triggered when the timer in the first layer expires. In this case, the retransmission for the PDU in the first layer may still be triggered based on the timer in the first layer without considering the discard timer in the second layer. Alternatively or additionally, if the discard indication is due to the ACK feedback associated with the PDU in the first layer, the terminal device 110 may avoid triggering the retransmission for the PDU in the first layer. In other words, the terminal device 110 may not trigger the retransmission for the PDU in the first layer if the discard indication is due to ACK for the PDU in the first layer, while the retransmission for the PDU in the first layer may still be triggered if the discard indication is due to the expiry of the discard timer.

In some example embodiments, whether PDU set importance (PSI) based discard is enabled may be considered when determining the trigger for the retransmission for the PDU in the first layer. In a case where PSI based discard is enabled, the above retransmission trigger criteria may be applied if the PDU in the first layer has a high importance level. The high importance level may mean that the PDU in the first layer has an importance level higher or equal to an importance threshold. Alternatively or additionally, if the PDU in the first layer has a low importance level, the terminal device 110 may disable a retransmission for the PDU in the first layer. The low importance level may mean that the PDU in the first layer has an importance level lower than an importance threshold. The importance threshold may be configured by the network device or pre-defined. In other words, the retransmission of the PDU in the first layer may not be applied to low importance data (for example, with discardTimerForLowImportance as the discard timer) if PSI-based discard is activated, thus the timer in the first layer may not be started for the low importance data and the retransmission may not be triggered based on the remaining time of the discard timer. The retransmission based on the timer in the first layer may only apply to data that is not of low importance. Retransmission of low importance data may be triggered based on the remaining time of the discard timer till discard.

As an example, a first configuration for a bearer may be set as follows:
- the discard timer in the second layer for a bearer is set to 50ms;
- the threshold condition for triggering the retransmission is configured as the remaining time of the discard timer being below 20ms; and
- the timer in the first layer based on initial transmission is 16ms (for example, which may take into account potential hybrid automatic retransmission request (HARQ)),

Based on the above first configuration for the bearer, if the initial transmission for a PDU in the first layer happens when the remaining time of the discard timer (of the SDU in the second layer (for example, PDCP SDU) in the PDU in the first layer (for example, RLC PDU)) is 40ms,
- the retransmission of the PDU in the first layer may be triggered after the expiry of the timer in the first layer, that is, at the remaining time of 40-16=24ms (i.e. at the expiry of the timer in the first layer, before the remaining time becomes below the threshold of 20ms), which ensures timely trigger of the retransmission without waiting for the remaining time to become below the threshold.

Based on the above first configuration for the bearer, if the initial transmission for a PDU in the first layer happens when the remaining time (of the SDU in the second layer in the PDU in the first layer) is 25ms,
- the retransmission of the PDU in the first layer may be triggered after the expiry of the timer in the first layer, i.e., at the remaining time of 25-16=9ms (i.e. at the expiry of the timer in the first layer, but after the remaining time becomes below the threshold of 20ms), which triggers the retransmission only when needed, e.g., if HARQ fails other than always trigger the retransmission when the remaining time becomes below threshold;
- alternatively, the retransmission may happen when the remaining time becomes below the threshold, i.e. at the remaining time of 20ms.

Based on the above first configuration for the bearer, if the initial transmission for a PDU in the first layer happens when the remaining time (of the SDU in the second layer in the PDU in the first layer) is 12ms,
- the retransmission of the PDU in the first layer may be triggered at the remaining time of 12ms (i.e. immediately after the initial transmission without waiting for the expiry of the timer in the first layer as it may have been otherwise discarded already), which allows the retransmission before discarding;
- alternatively, the retransmission may be triggered immediately after the initial transmission if the threshold for the remaining time is not configured.

As another example, a second configuration for a bearer may be set as follows:
- the discard timer in the second layer for a bearer is set to 50ms;
- the threshold condition for triggering the retransmission is configured as the remaining time of the discard timer being below 10ms; and
- the timer in the first layer based on initial transmission is 16ms (for example, which may take into account potential HARQ),

Based on the above second configuration for the bearer, if the initial transmission for a PDU in the first layer happens when the remaining time (of the SDU in the second layer in the PDU in the first layer) is 40ms,
- the retransmission of the PDU in the first layer may be triggered after the expiry of the timer in the first layer, i.e., at the remaining time of 40-16=24ms (i.e., at the expiry of the timer in the first layer, before the remaining time becomes below the threshold of 20ms).

Based on the above second configuration for the bearer, if the initial transmission for a PDU in the first layer happens when the remaining time (of the SDU in the second layer in the PDU in the first layer) is 25ms,
- the retransmission of the PDU in the first layer may be triggered after the expiry of the timer in the first layer, i.e., at the remaining time of 25-16=9ms (i.e., at the expiry of the timer in the first layer, but after the remaining time becomes below the threshold of 20ms);
- alternatively, the retransmission may happen when the remaining time becomes below the threshold, i.e. at the remaining time of 10ms.

Based on the above second configuration for the bearer, if the initial transmission for a PDU in the first layer happens when the remaining time (of the SDU in the second layer in the PDU in the first layer) is 12ms,
- the retransmission of the PDU in the first layer may be triggered at the remaining time of 10ms (i.e., after the initial transmission when the remaining time is below the threshold, without waiting for the expiry of the timer in the first layer as it may have been otherwise discarded already).

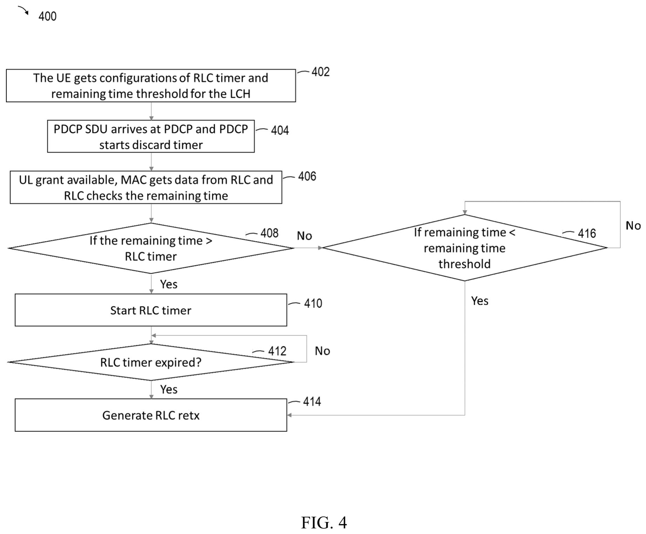

Reference is made to FIG. 4 to discuss an example communication process. It would be appreciated that the process flow 400 may be considered as a more specific example of the signaling flow 200 as shown in FIG. 2. The UE may be an example of the terminal device 110.

As shown in FIG. 4, at 402, the UE gets configurations of the RLC timer and the remaining time threshold associated with the discard timer for the logical channel (LCH). At 404, the PDCP SDU arrives at the PDCP layer and the PDCP entity starts the discard timer. At 406, when the UL grant is available, the MAC entity gets data from the RLC layer and the RLC entity checks the remaining time of the discard timer.

At 408, whether the remaining time is longer than the duration of the RLC timer (i.e., the remaining time > RLC timer) is determined. If the remaining time > RLC timer, at 410, the RLC timer is started. At 412, whether the RLC timer expired is determined. If the RLC timer expired, at 414, the RLC retransmission is generated. Otherwise, if the remaining time is shorter than or equal to the duration of the RLC timer, at 416, whether the remaining time is below the remaining time threshold (i.e., the remaining time < remaining time threshold) is determined. If the remaining time < remaining time threshold, the RLC retransmission is generated at 414. Otherwise, the operation 416 is repeated.

Operations and features as described above with reference to FIGS. 2 to 3C are likewise applicable to the process 400 and have similar effects. For the purpose of simplification, the details will be omitted.

According to some embodiments with reference to FIGS. 2 to 4, by taking the initial transmission timing into account when determining the trigger for the retransmission in the first layer other than only depending on the remaining time of the discard timer in the second layer or only depending on the timer in the first layer, it ensures a timely trigger of retransmissions in the first layer as well as avoid unnecessary retransmissions based on the timer in the first layer, while still allowing blind retransmissions when there is no enough time left for waiting for the timer in the first layer to expire in a case where the initial transmission happens too late. Moreover, this allows appropriate behavior when the terminal device is not able to discard data once given to the first layer.

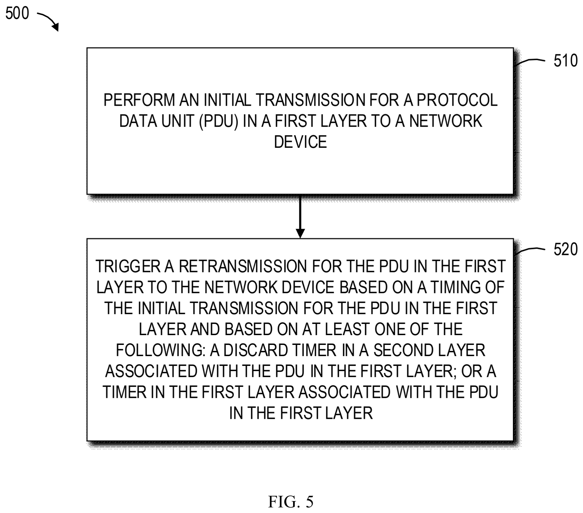

FIG. 5 illustrates a flowchart 500 of a method implemented at a terminal device according to some embodiments of the present disclosure. For the purpose of discussion, the method 500 will be described from the perspective of the terminal device 110 with reference to FIG. 1.

At block 510, the terminal device 110 performs an initial transmission for a PDU in a first layer to a network device.

At block 520, the terminal device 110 triggers a retransmission for the PDU in the first layer to the network device based on a timing of the initial transmission for the PDU in the first layer and based on at least one of the following: discard timer in a second layer associated with the PDU in the first layer; or a timer in the first layer associated with the PDU in the first layer.

In some example embodiments, the first layer may comprise an RLC layer, and the second layer may comprise a PDCP layer.

In some example embodiments, the first layer and the second layer may be a same layer.

In some example embodiments, to trigger the retransmission for the PDU in the first layer, the terminal device 110 may, based on determining that a remaining time of the discard timer in the second layer when the initial transmission for the PDU in the first layer is performed is longer than a duration of the timer in the first layer and based on determining that the timer in the first layer expires, trigger the retransmission for the PDU in the first layer. In some example embodiments, the terminal device 110 may further, based on determining that the remaining time of the discard timer in the second layer when the initial transmission for the PDU in the first layer is performed is longer than the duration of the timer in the first layer, start the timer in the first layer. In some example embodiments, the retransmission for the PDU in the first layer may be triggered regardless of whether a remaining time of the discard timer in the second layer becomes less than a time threshold.

In some example embodiments, to trigger the retransmission for the PDU in the first layer, the terminal device 110 may, based on determining that a remaining time of the discard timer in the second layer when the initial transmission for the PDU in the first layer is performed is longer than a duration of the timer in the first layer and based on determining that a remaining time of the discard timer in the second layer becomes less than a time threshold, trigger the retransmission for the PDU in the first layer. In some example embodiments, the terminal device 110 may further stop the timer in the first layer. In some example embodiments, to trigger the retransmission for the PDU in the first layer, the terminal device 110 may based on the following, triggering the retransmission for the PDU in the first layer: determining that the remaining time of the discard timer in the second layer when the initial transmission for the PDU in the first layer is performed is longer than the duration of the timer in the first layer; determining that the remaining time of the discard timer in the second layer becomes less than the time threshold; and determining that no retransmission for the PDU in the first layer has been triggered.

In some example embodiments, to trigger the retransmission for the PDU in the first layer, the terminal device 110 may, based on determining that a remaining time of the discard timer in the second layer when the initial transmission for the PDU in the first layer is performed is shorter than a duration of the timer in the first layer and based on determining that a remaining time of the discard timer in the second layer becomes less than a time threshold, trigger the retransmission for the PDU in the first layer.

In some example embodiments, to trigger the retransmission for the PDU in the first layer, the terminal device 110 may, based on determining that a remaining time of the discard timer in the second layer when the initial transmission for the PDU in the first layer is performed is shorter than a duration of the timer in the first layer and the remaining time of the discard timer in the second layer is less than a time threshold, trigger the retransmission for the PDU in the first layer.

In some example embodiments, the terminal device 110 may further receive, from the network device, a configuration of the time threshold.

In some example embodiments, to trigger the retransmission for the PDU in the first layer, the terminal device 110 may, based on determining that a remaining time of the discard timer in the second layer when the initial transmission for the PDU in the first layer is performed is shorter than a duration of the timer in the first layer and that a time threshold associated with the discard timer in the second layer is not configured or supported, trigger the retransmission for the PDU in the first layer.

In some example embodiments, the timing of the initial transmission for the PDU in the first layer may comprise one of the following: a timing when the PDU in the first layer is submitted to a third layer; a timing when the PDU in the first layer is multiplexed in a PDU in the third layer; or a timing when the PDU in the third layer is submitted to a fourth layer; or a timing when a TB associated with the PDU in the third layer is transmitted in the fourth layer. In some example embodiments, the third layer may comprise a media access control (MAC) layer and the fourth layer comprises a PHY layer.

In some example embodiments, to trigger the retransmission for the PDU in the first layer, the terminal device 110 may, based on determining that the PDU in the first layer is to be discarded based on a discard indication after the discard timer in the second layer expires, trigger the retransmission for the PDU in the first layer based on the timing of the initial transmission for the PDU in the first layer and based on at least one of the discard timer in the second layer or the timer in the first layer. In some example embodiments, the terminal device 110 may further, based on determining that the PDU in the first layer is not to be discarded based on the discard indication, and based on determining that the timer in the first layer expires, trigger a retransmission for the PDU in the first layer to the network device. In some example embodiments, the PDU in the first layer may not be discarded based on the discard indication, and the terminal device 110 may be able to determine whether the discard indication is due to ACK associated with the PDU in the first layer or due to expiry of the discard timer in the second layer, and to trigger the retransmission for the PDU in the first layer, the terminal device 110 may, based on determining that the discard indication is due to the expiry of the discard timer in the second layer and based on determining that the timer in the first layer expires, trigger the retransmission for the PDU in the first layer.

In some example embodiments, the terminal device 110 may further, based on determining that the discard indication is due to the ACK feedback associated with the PDU in the first layer, avoid triggering the retransmission for the PDU in the first layer.

In some example embodiments, the terminal device 110 may further receive, from the network device, a configuration of the timer in the first layer.

In some example embodiments, PDU set importance (PSI) based discard may be enabled, and the PDU in the first layer may have a high importance level. In some example embodiments, the terminal device 110 may further, based on determining that the PDU in the first layer has a low importance level, disable a retransmission for the PDU in the first layer to the network device.

In some example embodiments, based on determining that a service data unit (SDU) in the second layer associated with the PDU in the first layer is placed in a buffer in the second layer, the discard timer in the second layer may be started.

In some example embodiments, the timer in the first layer may be started upon the initial transmission for the PDU in the first layer.

Those skilled in the art can understand that all operations and features as described above with reference to FIGS. 2 to 4 are likewise applicable to the method 500 and have similar effects.

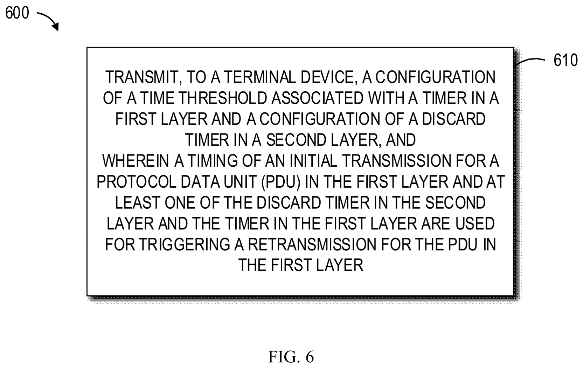

FIG. 6 illustrates a flowchart 600 of a method implemented at a network device according to some embodiments of the present disclosure. For the purpose of discussion, the method 600 will be described from the perspective of the network device 120 with reference to FIG. 1.

At block 610, the network device 120 transmits, to a terminal device, a configuration of a time threshold associated with a timer in a first layer and a configuration of a discard timer in a second layer, and wherein a timing of an initial transmission for a PDU in the first layer and at least one of the discard timer in the second layer and the timer in the first layer are used for triggering a retransmission for the PDU in the first layer.

In some example embodiments, the first layer may comprise an RLC layer, the second layer comprises a PDCP layer, and the third layer may comprise a MAC layer.

In some example embodiments, the first layer and the second layer may be a same layer.

Those skilled in the art can understand that all operations and features as described above with reference to FIGS. 2 to 4 are likewise applicable to the method 600 and have similar effects.

In some example embodiments, an apparatus capable of performing the method 500 (for example, the terminal device 110) may comprise means for performing the respective steps of the method 500. The means may be implemented in any suitable form. For example, the means may be implemented in a circuitry or software module.

In some example embodiments, the apparatus comprises means for performing an initial transmission for a PDU in a first layer to a network device; and means for triggering a retransmission for the PDU in the first layer to the network device based on a timing of the initial transmission for the PDU in the first layer and based on at least one of the following: a discard timer in a second layer associated with the PDU in the first layer; or a timer in the first layer associated with the PDU in the first layer.

In some example embodiments, the first layer may comprise an RLC layer, and the second layer may comprise a PDCP layer.

In some example embodiments, the first layer and the second layer may be a same layer.

In some example embodiments, the means for triggering the retransmission for the PDU in the first layer may comprise means for, based on determining that a remaining time of the discard timer in the second layer when the initial transmission for the PDU in the first layer is performed is longer than a duration of the timer in the first layer and based on determining that the timer in the first layer expires, triggering the retransmission for the PDU in the first layer. In some example embodiments, the apparatus may further comprise means for, based on determining that the remaining time of the discard timer in the second layer when the initial transmission for the PDU in the first layer is performed is longer than the duration of the timer in the first layer, starting the timer in the first layer. In some example embodiments, the retransmission for the PDU in the first layer may be triggered regardless of whether a remaining time of the discard timer in the second layer becomes less than a time threshold.

In some example embodiments, the means for triggering the retransmission for the PDU in the first layer may comprise means for, based on determining that a remaining time of the discard timer in the second layer when the initial transmission for the PDU in the first layer is performed is longer than a duration of the timer in the first layer and based on determining that a remaining time of the discard timer in the second layer becomes less than a time threshold, triggering the retransmission for the PDU in the first layer. In some example embodiments, the apparatus may further comprise means for stopping the timer in the first layer. In some example embodiments, the means for triggering the retransmission for the PDU in the first layer may comprise means for, based on the following, triggering the retransmission for the PDU in the first layer: determining that the remaining time of the discard timer in the second layer when the initial transmission for the PDU in the first layer is performed is longer than the duration of the timer in the first layer; determining that the remaining time of the discard timer in the second layer becomes less than the time threshold; and determining that no retransmission for the PDU in the first layer has been triggered.

In some example embodiments, the means for triggering the retransmission for the PDU in the first layer may comprise means for, based on determining that a remaining time of the discard timer in the second layer when the initial transmission for the PDU in the first layer is performed is shorter than a duration of the timer in the first layer and based on determining that a remaining time of the discard timer in the second layer becomes less than a time threshold, triggering the retransmission for the PDU in the first layer.

In some example embodiments, the means for triggering the retransmission for the PDU in the first layer comprises means for, based on determining that a remaining time of the discard timer in the second layer when the initial transmission for the PDU in the first layer is performed is shorter than a duration of the timer in the first layer and the remaining time of the discard timer in the second layer is less than a time threshold, triggering the retransmission for the PDU in the first layer.

In some example embodiments, the apparatus further comprises means for receiving, from the network device, a configuration of the time threshold.

In some example embodiments, the means for triggering the retransmission for the PDU in the first layer may comprise means for, based on determining that a remaining time of the discard timer in the second layer when the initial transmission for the PDU in the first layer is performed is shorter than a duration of the timer in the first layer and that a time threshold associated with the discard timer in the second layer is not configured or supported, triggering the retransmission for the PDU in the first layer.

In some example embodiments, the timing of the initial transmission for the PDU in the first layer may comprise one of the following: a timing when the PDU in the first layer is submitted to a third layer; a timing when the PDU in the first layer is multiplexed in a PDU in the third layer; or a timing when the PDU in the third layer is submitted to a fourth layer; or a timing when a TB associated with the PDU in the third layer is transmitted in the fourth layer. In some example embodiments, the third layer may comprise a MAC layer and the fourth layer comprises a PHY layer.

In some example embodiments, the means for triggering the retransmission for the PDU in the first layer may comprise means for, based on determining that the PDU in the first layer is to be discarded based on a discard indication after the discard timer in the second layer expires, triggering the retransmission for the PDU in the first layer based on the timing of the initial transmission for the PDU in the first layer and based on at least one of the discard timer in the second layer or the timer in the first layer. In some example embodiments, the apparatus may comprise means for, based on determining that the PDU in the first layer is not to be discarded based on the discard indication, and based on determining that the timer in the first layer expires, trigger a retransmission for the PDU in the first layer to the network device. In some example embodiments, the PDU in the first layer may not be discarded based on the discard indication, and the apparatus is able to determine whether the discard indication is due to ACK associated with the PDU in the first layer or due to expiry of the discard timer in the second layer, and the means for triggering the retransmission for the PDU in the first layer may comprise means for, based on determining that the discard indication is due to the expiry of the discard timer in the second layer and based on determining that the timer in the first layer expires, triggering the retransmission for the PDU in the first layer. In some example embodiments, the apparatus may further comprise means for, based on determining that the discard indication is due to the ACK feedback associated with the PDU in the first layer, avoiding triggering the retransmission for the PDU in the first layer.

In some example embodiments, the apparatus may further comprise means for receiving, from the network device, a configuration of the timer in the first layer.

In some example embodiments, PDU set importance (PSI) based discard may be enabled, and the PDU in the first layer may have a high importance level. In some example embodiments, the apparatus may further comprise means for, based on determining that the PDU in the first layer has a low importance level, disabling a retransmission for the PDU in the first layer to the network device.

In some example embodiments, based on determining that a service data unit (SDU) in the second layer associated with the PDU in the first layer may be placed in a buffer in the second layer, the discard timer in the second layer is started.

In some example embodiments, the timer in the first layer may be started upon the initial transmission for the PDU in the first layer.

In some embodiments, the apparatus further comprises means for performing other steps in some embodiments of the method 500. In some embodiments, the means comprises at least one processor and at least one memory including computer program code, the at least one memory and computer program code configured to, with the at least one processor, cause the performance of the apparatus.

In some example embodiments, an apparatus capable of performing the method 600 (for example, the network device 120) may comprise means for performing the respective steps of the method 600. The means may be implemented in any suitable form. For example, the means may be implemented in a circuitry or software module.

In some example embodiments, the apparatus comprises means for transmitting, to a terminal device, a configuration of a time threshold associated with a timer in a first layer and a configuration of a discard timer in a second layer, and wherein a timing of an initial transmission for a PDU in the first layer and at least one of the discard timer in the second layer and the timer in the first layer may be used for triggering a retransmission for the PDU in the first layer.

In some example embodiments, the first layer may comprise an RLC layer, the second layer may comprise a PDCP layer, and the third layer comprises a MAC layer.

In some example embodiments, the first layer and the second layer may be a same layer.

In some embodiments, the apparatus further comprises means for performing other steps in some embodiments of the method 600. In some embodiments, the means comprises at least one processor and at least one memory including computer program code, the at least one memory and computer program code configured to, with the at least one processor, cause the performance of the apparatus.

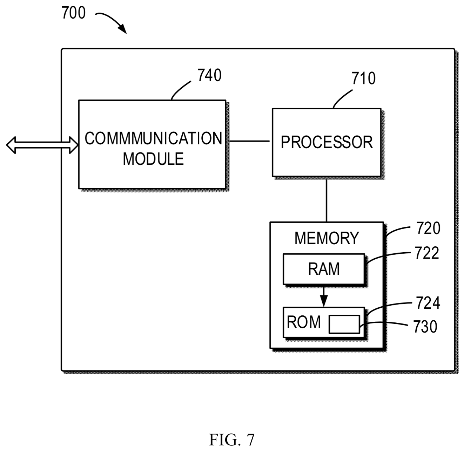

FIG. 7 illustrates a simplified block diagram of a device 700 that is suitable for implementing some example embodiments of the present disclosure. The device 700 may be provided to implement the communication device, for example, the terminal device 110, or the network device 120 as shown in FIG. 1. As shown, the device 700 includes one or more processors 710, one or more memories 720 coupled to the processor 710, and one or more communication modules 740 coupled to the processor 710.

The communication module 740 is for bidirectional communications. The communication module 740 has at least one antenna to facilitate communication. The communication interface may represent any interface that is necessary for communication with other network elements.

The processor 710 may be of any type suitable to the local technical network and may include one or more of the following: general purpose computers, special purpose computers, microprocessors, digital signal processors (DSPs) and processors based on multicore processor architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 722 and other volatile memories that will not last in the power-down duration.

A computer program 730 includes computer executable instructions that are executed by the associated processor 710. The program 730 may be stored in the ROM 724. The processor 710 may perform any suitable actions and processing by loading the program 730 into the RAM 722.

The embodiments of the present disclosure may be implemented by means of the program 730 so that the device 700 may perform any process of the disclosure as discussed with reference to FIGS. 2 to 4. The embodiments of the present disclosure may also be implemented by hardware or by a combination of software and hardware.

In some example embodiments, the program 730 may be tangibly contained in a computer readable medium which may be included in the device 700 (such as in the memory 720) or other storage devices that are accessible by the device 700. The device 700 may load the program 730 from the computer readable medium to the RAM 722 for execution. The computer readable medium may include any types of tangible non-volatile storage, such as ROM, EPROM, a flash memory, a hard disk, CD, DVD, and the like.

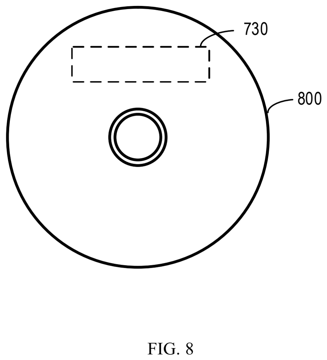

FIG. 8 illustrates a block diagram of an example of a computer readable medium 800 in accordance with some example embodiments of the present disclosure. The computer readable medium 800 has the program 730 stored thereon. It is noted that although the computer readable medium 800 is depicted in form of CD or DVD in FIG. 8, the computer readable medium 800 may be in any other form suitable for carrying or holding the program 730.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method as described above with reference to any of FIGS. 5 and 6. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A terminal device comprising:
at least one processor; and
at least one memory storing instructions that, when executed by the at least one processor, cause the terminal device at least to:
perform an initial transmission for a protocol data unit, PDU, in a radio link control, RLC, layer to a network device; and
trigger a retransmission, for the PDU in the RLC to the network device when submitting the initial transmission for the PDU from the RLC layer to a medium access control, MAC, layer, based on a discard timer associated with the PDU in a packet data convergence protocol layer, PDCP, being below a threshold when submitting the initial transmission for the PDU from the RLC layer to the MAC layer.

2. The terminal device of claim 1, wherein the retransmission is a blind retransmission with no acknowledgement being received for the initial transmission by the time when the retransmission is triggered.

3. The terminal device of claim 1 or 2, wherein the terminal device is caused to receive a configuration of the threshold from the network device.

4. The terminal device of any preceding claim, wherein the terminal device is caused to trigger the retransmission immediately for the next transport block following the initial transmission.

5. The terminal device of any preceding, wherein based on determining that a service data unit (SDU) in the PDCP layer associated with the PDU in the RLC layer is placed in a buffer in the PDCP layer, the discard timer in the PDCP layer is started.

6. A method comprising:
performing, at a terminal device, an initial transmission for a protocol data unit, PDU, in a radio link control, RLC, layer to a network device; and
triggering a retransmission, at the terminal device, for the PDU in the RLC to the network device when submitting the initial transmission for the PDU from the RLC layer to a medium access control, MAC, layer, based on a discard timer associated with the PDU in a packet data convergence protocol layer, PDCP, being below a threshold when submitting the initial transmission for the PDU from the RLC layer to the MAC layer.

7. The method of claim 6, wherein the retransmission is a blind retransmission with no acknowledgement being received for the initial transmission by the time when the retransmission is triggered.

8. The method of claim 6 or 7, wherein the terminal device receives a configuration of the threshold from the network device.

9. The method of any preceding claim, wherein the terminal device triggers the retransmission immediately for the next transport block following the initial transmission.

10. The method of any preceding, wherein based on determining that a service data unit (SDU) in the PDCP layer associated with the PDU in the RLC layer is placed in a buffer in the PDCP layer, the terminal device starts the discard timer in the PDCP layer.

11. A computer readable medium comprising program instructions for causing a terminal device to perform a computer process comprising:
performing an initial transmission for a protocol data unit, PDU, in a radio link control, RLC, layer to a network device; and
triggering a retransmission, for the PDU in the RLC to the network device when submitting the initial transmission for the PDU from the RLC layer to a medium access control, MAC, layer, based on a discard timer associated with the PDU in a packet data convergence protocol layer, PDCP, being below a threshold when submitting the initial transmission for the PDU from the RLC layer to the MAC layer.

12. The computer readable medium of claim 11, wherein the retransmission is a blind retransmission with no acknowledgement being received for the initial transmission by the time when the retransmission is triggered.

13. The computer readable medium of claim 11 or 12, wherein the computer process comprises receiving a configuration of the threshold from the network device.

14. The computer readable medium of any preceding claim 11 to 13, wherein the computer process comprises triggering the retransmission immediately for the next transport block following the initial transmission.

15. The computer readable medium of any preceding 11 to 14, wherein the computer process comprises, based on determining that a service data unit (SDU) in the PDCP layer associated with the PDU in the RLC layer is placed in a buffer in the PDCP layer, starting the discard timer in the PDCP layer.
